# EUROPEAN PATENT APPLICATION

(11) **EP 1 698 393 A1**
(43) Date of publication of application: **06.09.2006**
(21) Application number: 05004654.9
(22) Date of filing: 03.03.2005
(51) Int. Cl.: B01J 2/16

(54) **Process and device for fluidized bed granulation**

(71) Applicant: UREA CASALE S.A., 6900 Lugano-Besso (CH)
(72) Inventor: Bedetti, Gianfranco, 20149 Milano (IT); Burlando, Carla, 6932 Breganzona (CH)
(74) Representative: Zardi, Marco

(57) **Abstract**

A fluid bed granulation process of a predetermined substance is characterized in that it comprises the steps of: - making a first fluid bed (Z1') of granules of the substance through a respective first flow (A1) of fluidizing air; - feeding a granule growth substance (L) in liquid state into the first fluid bed (Z1); - inducing, in the first fluid bed (Z1), the formation of at least one substantially vortex-shaped circulatory movement (V1) of the granules (S1) of the predetermined substance and maintaining it, the vortex-shaped movement extending helically, with substantially horizontal axis, from an end of the bed (Z1), at which seeds of the substance are continuously fed, to an opposite end thereof, for discharging the granules (S2) obtained; - forming a second fluid bed (Z2), structurally independent from the first bed (z1), with the granules (S2) thus obtained in the first bed (Z1) and through a respective second flow of fluidizing air (A2), - feeding a continuous flow of the granule growth substance (L) in liquid state into the second fluid bed (Z2); - inducing, in the second fluid bed (Z2), the formation of at least one substantially cylindrical vortex-shaped circulatory movement (V2), with horizontal axis, of the granules of substance of which it is formed and maintaining it; - recovering the granules of substance (S3) of predetermined grain size from the second bed.

## Description

### Field of application

The present invention refers, in its most general aspect, to a fluid bed granulation process of a predetermined substance such as urea, ammonium nitrate, ammonium chloride and other substances that can be granulated.

More specifically, this invention concerns a fluid bed granulation process in which granules of the predetermined substance are obtained through continuous growth (in volume and in mass) of granule seeds of such a substance, continuously fed into said fluid bed, at the same time as a flow of an appropriate growth substance in liquid state.

In the following description and in the subsequent claims, with the expression "granule seeds of an appropriate substance" or more simply "seeds" it is intended to generally indicate granules of substance, having a diameter equal to or less than 2.5 mm.

### Prior Art

It is known that to obtain a good granulation result (predetermined size, shape and mass of the granule) through a fluid bed process of the aforementioned type, it is necessary to form and feed said bed with seeds of the substance to be granulated and grow them through feeding of an appropriate growth substance, generally the same substance to be granulated, in liquid'state.

The growth substance is fed to the fluid bed in the form of the smallest possible droplets (certainly smaller than the seeds and the granules that form said bed) which, wetting the seeds and granules respectively, stick to them and increase their mass, forming granules of gradually increasing size.

Advantageously, said growth substance is fed in so-called "atomized" form. Only in this state, indeed, does said growth substance manage to meet the individual seeds and granules suspended in the fluid bed, wet them, uniformly and optimally covering their entire surface.

To atomize the growth substance, the prior art uses special nozzles and large volumes of air (or another appropriate gas) at a high speed, for example between 150 m/s and 300 m/s.

With wetting complete, the growing seeds and granules are subjected to an evaporation step of the possible solvent and then to a solidification/consolidation step.

A process of this type, for producing urea, is described in US-A-4 353 730.

Although widely used and also advantageous from various points of view, the fluid bed granulation processes of the prior art suffer from recognized drawbacks not yet overcome, the most notable of which consist of the substantial impossibility of controlling the grain size of the end product within a predetermined range of values and of the high operating costs.

Indeed, the very large volumes of air used at the high speeds necessary for effective atomization of the growth substance prevent effective and desired control of the growth of the granules inside the fluid bed.

Moreover, it is always necessary to carry out classification and screening operations of the granules produced, with a substantial discarding of granules of unacceptable size (either too big or too small), recovery operations of the discarded granules and recycling thereof upstream of the granulation process.

### Summary of the invention

The problem underlying the present invention is that of devising and providing a fluid bed granulation process having functional features such that the drawbacks quoted with reference to the prior art are totally overcome.

This technical problem outlined above is solved, according to the invention, by a fluid bed granulation process of a predetermined substance, characterized in that it comprises the steps of:
- making a first fluid bed of granules of said substance through a respective first flow of fluidizing air;
- feeding a granule growth substance in liquid state into said first fluid bed;
- inducing, in said first fluid bed, the formation of at least one substantially vortex-shaped circulatory movement of the granules of the predetermined substance and maintaining it, said vortex-shaped movement extending helically, with substantially horizontal axis, from an end of said bed, at which seeds of said substance are continuously fed, to an opposite end thereof, for discharging the granules obtained;
- forming a second fluid bed, structurally independent from said first bed, with the granules thus obtained in said first bed and through a respective second flow of fluidizing air,
- feeding a continuous flow of said granule growth substance in liquid state into said second fluid bed;
- inducing, in said second fluid bed, the formation of at least one substantially cylindrical vortex-shaped circulatory movement, with horizontal axis, of said granules of substance of which it is formed and maintaining it;
- recovering the granules of substance of predetermined grain size from said second bed.

Further features and advantages of the invention will appear more clearly from the following indicative and non limiting detailed description of an embodiment of the process according to the invention, made with reference to the attached drawings.

### Brief description of the drawings

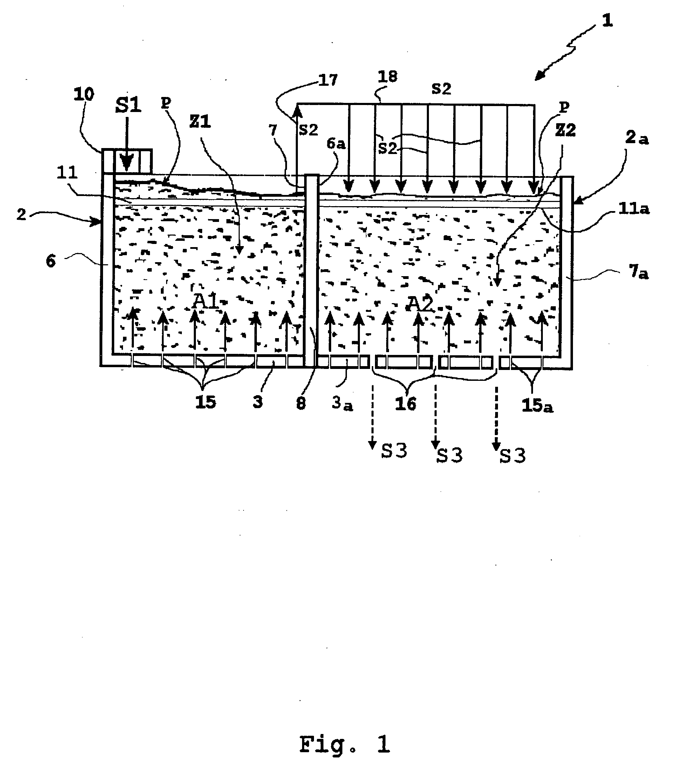

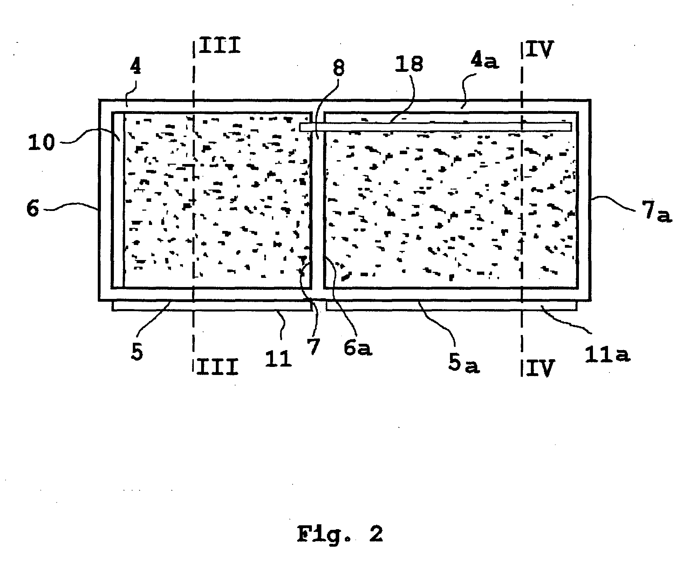

Figs. 1 and 2 schematically represent a longitudinal section and a plan section, respectively, of an apparatus for carrying out the granulation process of the present invention;

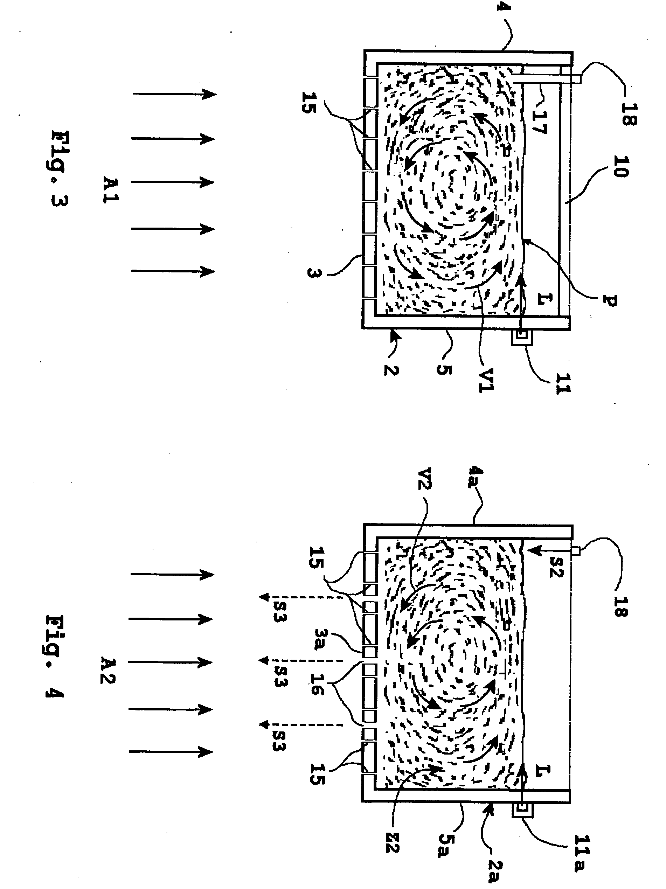

Figs. 3 and 4 schematically represent cross sections of the granulator of figures 1 and 2, along the lines III-III and IV-IV of figure 2, respectively;
Fig. 5 schematically represents a plan view of a detail of figure 1 according to an alternative embodiment of the present invention;
Fig. 6 schematically represents a plan view of a detail of figure 1 according to a further alternative embodiment of the present invention;
Figs. 7 and 8 schematically represent a plan view and a cross section along the line VIII-VIII of figure 7, respectively, of a detail of figure 1 according to another further alternative embodiment of the present invention.

### Detailed description of a preferred embodiment

With reference to the figures, an apparatus for carrying out a fluid bed granulation process according to the present invention is globally and schematically indicated with 1.

Such an apparatus 1 comprises a first fluid bed Z1 made in a container 2, preferably parallelepiped, represented open at the top, preferably with a rectangular section, equipped with a base 3, of the grid type to allow the passage of an appropriate flow of fluidizing air A1, used for the formation and support of said fluid bed Z1, as shall be described later on. The grid base 3, for example consisting of a plate equipped with a plurality of through holes 15, is positioned between two opposite long side walls 4, 5 and between two opposite short side walls 6, 7. The short side walls 6, 7 are indicated in the rest of the description as front and back walls, respectively, with reference to the inlet into the fluid bed Z1 of the substance to be granulated (seeds) and to the discharge of the granules obtained.

At the top side of the front wall 6 of said container 2 a device 10 (per se conventional and therefore not described in detail) for feeding a continuous flow of seeds S1 of the substance to be granulated therein is supported; in order to ensure a uniform distribution of seeds S1, said device 10 preferably extends for the entire width of the wall 6.

Close to the top side of the long side wall 5, a distributor-dispenser 11 is supported, for feeding a continuous flow L of a predetermined liquid granule growth substance into the fluid bed Z1. Said distributor 11 extends substantially for the entire length of the wall 5.

The apparatus of the present invention comprises a second fluid bed Z2, made in a respective container 2a, similar to the aforementioned container 2 of the fluid bed Z1. The containers 2 and 2a can be the same size or, preferably, are differently sized, with the container 2a being of a greater length than the container 2, for example 1.5-4 times longer. The container 2a is also equipped with a grid base 3a, to allow the passage of a respective flow of fluidizing air A2. Said grid base 3a, for example consisting of a plate equipped with a plurality of holes 15a, is positioned between long side walls 4a, 5a, and short side walls 6a, 7a, front and back respectively.

At the side wall 5a a distributor-dispenser 11a is foreseen on top to feed a granule growth substance in liquid state L into the fluid bed Z2. Such a growth substance is preferably of the same type as the substance to be granulated.

In accordance with a preferred embodiment, whilst the fluid beds Z1 and Z2 are structurally independent, the respective containers 2 and 2a have a wall in common so as to constitute a single structure. Preferably, said common wall, indicated with 8, constitutes the back wall 7 for the container 2 and the front wall 6a for the container 2a.

In accordance with the granulation process of the present invention, a first fluid bed Z1 is made in the container 2 through a respective flow of fluidizing air A1, feeding a continuous flow of seeds S1 of the predetermined substance to be granulated at the front wall 6 of said container.

A continuous flow L of a granule growth substance in liquid state is fed into such a bed Z1, which at said front wall 6 has its "free surface" p at a predetermined height from the base 3. Such a flow L is dispensed by the distributor-dispenser 11 substantially on the entire length of the wall 5 of said container 2.

At said front wall 6, the seeds S1 o;f the substance to be granulated are "suspended" in the fluid bed Z1 and simultaneously wetted by the liquid growth substance, which determines the formation of respective granules. These granules, suspended in the fluid bed Z1, are also continuously wetted by said liquid substance L, for which reason they undergo a continuous growth towards a predetermined grain size value. The "removal" of the granules obtained S2 in the bed Z1 takes place at the back wall 7-8 of the container 2; in particular, it is carried out in a position such that, at said wall, the free surface p of the fluid bed Z1 is at a lower height on the bottom 3 than its height at the front wall 6. This imposed situation creates a sort of "fluid vein" in the fluid bed Z1 extending between said front and back walls 6, 7-8. In other words, for such a situation the growing granules, which constitute the fluid bed Z1, move inside said bed, from the front wall 6 towards the back wall 7-8.

It should be noted that the flow of the growth substance is orientated transversally to the aforementioned "fluid vein".

In accordance with a feature of the present invention, the formation and maintenance of at least one substantially vortex-shaped circulatory movement (one in the example of the figures) of the granules of the predetermined substance, hereafter more simply called vortex V1, is caused in the fluid bed Z1.

For such a purpose, the flow L of growth substance can, for example, be advantageously used, foreseeing an appropriate flow rate/speed for it and feeding it into the fluid bed Z1 in a direction substantially tangential to the free surface p thereof,

Taking into account the aforementioned movement of the growing granules inside the bed Z1 (fluid vein), the vortex V1 develops according to a substantially helical configuration, with horizontal axis, from the front wall 6 to the back wall 7-8, of the container 2, in other words from an end of said bed Z1, at which seeds of the substance to be granulated are continuously fed, to an opposite end thereof, for discharge of the granules obtained.

Preferably, the vortex V1 is obtained using the same flow of fluidizing air A1.

According to a first embodiment of the invention said air flow A1 is divided into a plurality of fractions having respective flow rates between a minimum value flow rate, sufficient to support the fluid bed Z1, fed at a first area thereof and a maximum value flow rate, fed in another area of the bed itself so as to create and maintain said vortex V1.

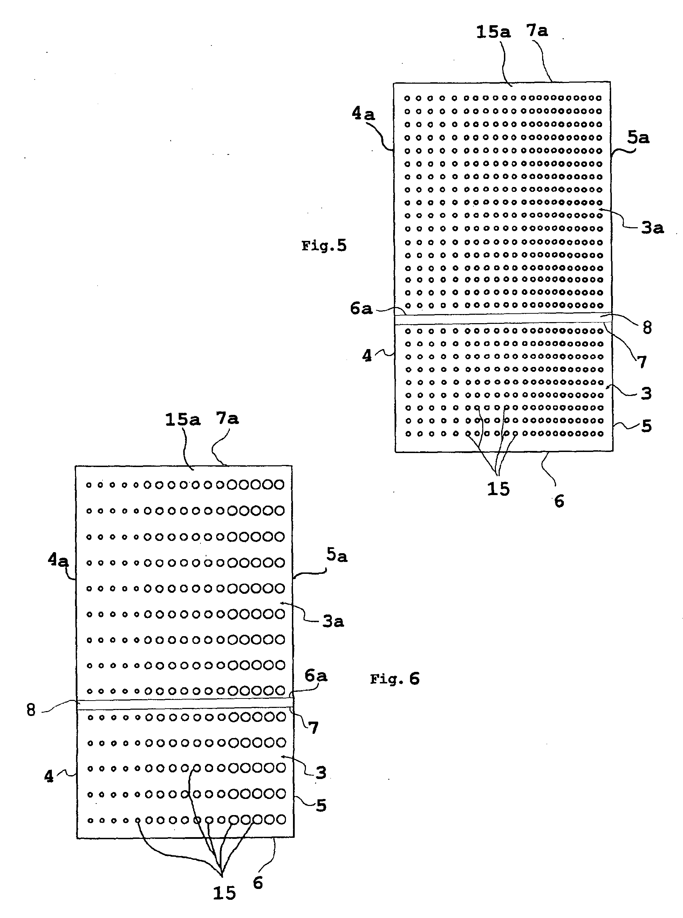

For such a purpose (fig. 5), the holes 15 of the grid base 3 are distributed non-homogeneously: their distribution in said base 3 is selected so that their "density", taken as the amount of holes per square centimetre of surface, increases from the side wall 4 towards the opposite side wall 5. Such a distribution promotes a greater flow rate of fluidizing air A1 at the aforementioned side wall 5 and a lesser flow rate at the opposite side wall 4.

Alternatively, said holes 15 are distributed homogeneously, but are of different sizes. More spectifivally (fig. 6) the size of the holes 15 increases from the side wall 4 of the container 2 towards the opposite side wall 5, at which the distributor-dispenser 11 is supported on top. In this way a greater flow rate of fluidizing air is provided close to the side wall 5.

Thanks to the special structure of the grid base 3 according to the present invention, as one approaches the wall 5 of said container 2, the increasing flow rate and speed values of the fluidizing air A1 causes the growing granules to be drawn upwards, towards the free surface p of the fluid bed. The degree of such drawing upwards also increases as one approaches said wall 5, at which it reaches its maximum value.

As a first effect, this increase in the degree of drawing upwards, carried out on the granules of the fluid bed Z1, causes the formation in the fluid bed of the substantially vortex-shaped circulatory movement V1 described above, of the granules about an ideal axis that, in the example of the figures, is substantially horizontal, said circulatory movement extending helically from the front wall 6 to the back wall 7 of said container 2.

As a second effect, the aforementioned drawing upwards causes, as part of said circulatory movement and, more specifically, in the ascending portion thereof, thinning of the granules, reciprocal spacing apart of the granules, which is more evident right near to the wall 5 of the container 2, i.e. at the area of said grid 3 where the "density" of the holes 11 is greater (or else where the size of the holes is greater), in other words where the flow rate of fluidizing air injected into the fluid bed is greater.

At the greater thinning of the granules and where the temperature of the fluidizing air is higher, the wetting of said granules by the growth liquid L, preferably fed in atomized form, takes place. Precisely because they are thinned out, in other words well spaced apart, the wetting of the granules takes place in a very uniform and optimal way. Consequently, the uniformity of growth of the granules themselves is improved. Moreover, where the aforementioned wetting of the individual granules takes place, the air of the flow responsible for the rotary current of granules that has formed in the fluid bed is hot and takes care of uniformly and optimally evaporating the possible solvent used in the growth liquid. Consequently, the thickness of the "new" layer of growth substance deposited on each individual granule is uniform and optimal.

After wetting, the individual granules move towards the opposite wall 4 of the container 2, together with the granules that immediately follow them in the aforementioned circulatory movement, thus crossing successive areas of the fluid bed at which the grid base 3 has a progressively reducing density of holes 15 (or else holes of progressively smaller size). In these areas of the fluid bed the upward push applied by the fluidizing air A1, at its maximum close to the wall 5 of the container 2, decreases right down to zero. For this reason, close to said wall 4, the current of granules naturally deviates towards the grid base 3 of the container 2.

In the path towards the grid base 3, the individual granules of said circulatory movement cross progressively colder underlying layers of the fluid bed. During this path the solidification/consolidation step of the growth liquid on the surface of each individual granules is carried out, a step that is completed during the subsequent path portion extending up to the wall 5 obtaining respective granules, of slightly increased volume and mass. From here every single granule starts a new growth cycle the same as the one described above, whilst it also moves towards the discharge wall (helical movement of the "vortex").

According to another alternative embodiment of the invention, the vortex V1 described above is obtained by appropriately varying the inlet direction of such a flow of air A1 into the fluid bed 2.

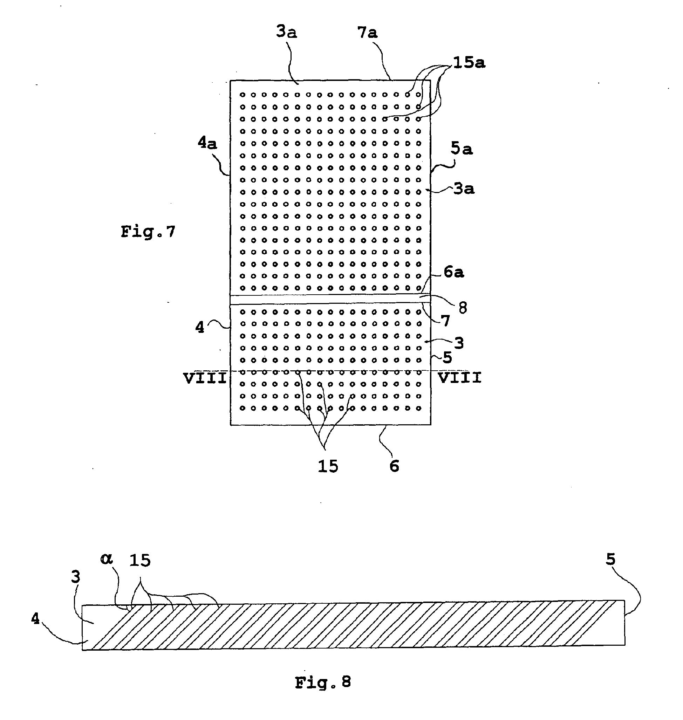

For such a purpose (figures 7, 8), the holes 15 of the grid base 3 are uniformly distributed, all have the same diameter, and are all equally inclined from the horizontal by a predetermined angle α, preferably between 30° and 60°, for example 45°.

The inclination of said holes is selected so that the push of air on the granules has a vertical component such as to ensure the support of the fluid bed Z1 and a horizontal component that allows the vortex V1 to be created and maintained.

With the granules obtained S2 in the first fluid bed Z1, in the container 2a a second fluid bed Z2 is made, through a respective flow of fluidizing air A2.

For such a purpose, such granules S2 are removed from the first fluid bed Z1 through means 17 (per se conventional and therefore not described in detail) and transferred to a distributor 18 (also per se conventional and therefore not described in detail) extending above the container 2a, from which they are regularly distributed, on the entire length of the second fluid bed Z2, for example close to the long side wall 4a, from the front wall 6a-B thereof, to the back wall 7a.

A continuous flow of a granule growth substance L in liquid state is fed into the fluid bed Z2, through the distributor 11.

In the same way as what has been described for the fluid bed Z1, a respective substantially vortex-shaped circulatory movement V2 of the growing granules that constitute the fluid bed is formed and maintained in the second fluid bed Z2. Since no "fluid vein" is formed in the bed of granules Z2, said vortex-shaped movement V2 develops cylindrically with horizontal axis inside the second container 2a.

Also in this case, the vortex V2 can be obtained using the flow of growth substance, as well as, more preferably, the fluidizing air A2 itself.

From the second bed Z2, the granules S2 produced are discharged through a plurality of slits 16 made in the grid base 3a. Such slits 16 are suitably sized and of a width linked to (greater than) the diameter of the granules S3 intended to be produced.

In particular, the discharge of the finished granules S3 from the base 3a of the container 2a takes place by gravity, preferably in countercurrent to said flow of air A2 or another appropriate classification gas fed into said fluid bed Z2 through said slits 16.

According to a further embodiment of the present invention, not represented, the granulation process foresees the formation of two opposite substantially vortex-shaped circulatory movements of granules in a same fluid bed (Z1 and/or Z2) of the substance to be granulated.

For such a purpose, a distributor-dispenser is foreseen, to feed the growth liquid in the fluid bed, on each of the opposite long side walls of the container and, preferably, a grid base is foreseen with through holes arranged according to equal and symmetrically opposite distributions with respect to a median axis thereof. In the case of a second fluid bed Z2 with two opposite vortices, the granules obtained in the first fluid bed are transferred and regularly distributed on the entire length of the second fluid bed, preferably at the longitudinal axis of the respective second container.

Thanks to the process according to the present invention it is possible to obtain an end product with a very low degree of grain size polydispersion and to achieve an improved energy saving with respect to the processes of the prior art.

This advantage is further increased by the fact, quoted above, that each individual granule of substance is advantageously subjected to a substantially identical growth process, since the execution time of each cycle (wetting, drying, desiccation and solidification) and the number of cycles to be carried out inside the fluid bed can be controlled by controlling the variations in flow rate of the flow of fluidizing air in the different areas of said fluid bed.

Moreover, thanks to the granulation process according to the present invention, a substantial reduction in the formation of powders, with respect to the processes according to the prior art, has been noted. This also means a substantial reduction in the apparatuses needed to recover such powders that, together with the possibility of obtaining an end product of appropriate grain size, i.e, directly "saleable", allow the investment and maintenance costs, as well as the energy consumption of the corresponding granulation plant, to be substantially reduced.

Last but not least, the use of fluidizing air to create and maintain the aforementioned vortex-shaped circulatory movement in the fluid bed of the growing granules advantageously allows the use of additional external energy sources to be avoided to achieve the same purpose and consequently has a positive effect on the efficiency of the process, decreasing consumption.

The present invention can be subjected to further embodiments and modifications all of which are within the reach of the man skilled in the art and, as such, fall within the scope of protection of the invention itself, as defined by the following claims.

## Claims

1. Fluid bed granulation process of a predetermined substance, **characterized in that** it comprises the steps of:
- making a first fluid bed (Z1) of granules of said substance through a respective first flow (A1) of fluidizing air;
- feeding a granule growth substance (L) in liquid state into said first fluid bed (Z1);
- inducing, in said first fluid bed (Z1), the formation of at least one substantially vortex-shaped circulatory movement (V1) of the granules of the predetermined substance and maintaining it, said vortex-shaped movement (V1) extending helically, with substantially horizontal axis, from an end of said bed (Z1), at which seeds (S1) of said substance are continuously fed, to an opposite end thereof, for discharging the granules (S2) obtained;
- forming a second fluid bed (Z2), structurally independent from said first bed (Z1), with the granules (S2) thus obtained in said first bed (Z1) and through a respective second flow of fluidizing air (A2),
- feeding a continuous flow of said granule growth substance (L) in liquid state into said second fluid bed (Z2);
- inducing, in said second fluid bed (Z2), the formation of at least one substantially cylindrical vortex-shaped circulatory movement (V2), with horizontal axis, of said growing granules of which it is formed and maintaining it;
- recovering the granules of substance (s3) of predetermined grain size from said second bed (Z2).

2. Process according to claim 1, **characterized in that** said vortex-shaped circulatory movements (V1, V2) are induced and maintained by feeding the respective flows (L) of growth substance into the fluid beds (Z1 and Z2) in a direction tangential to the vortices themselves and transversally to their axes.

3. Process according to claim 1, **characterized in that** said vortex-shaped circulatory movements (V1, V2) are induced and maintained by using at least part of the respective flows of fluidizing air (A1, A2).

4. Process according to claim 1, **characterized in that** the recovery of the finished granules from said second bed (Z2) is carried out through discharge by gravity thereof in contrast to said second flow of fluidizing air.

5. Process according to claim 1, **characterized in that** said second fluid bed (Z2) is formed, maintained and fed through transfer of the granules (S2) produced in said first fluid bed (Z1) to a distributor (18) extending above said second fluid bed (Z1), substantially for the entire axial length thereof.

6. Apparatus for the granulation of a predetermined substance according to the method of the previous claims, **characterized in** the it comprises:
- a first fluid bed (Z1) made in a first container (2), preferably parallelepiped, equipped with a grid base (3) to allow the passage of a first flow of fluidizing air (A1), used for the formation and support of said fluid bed (Z1), positioned between two opposite long side walls (4, 5) and between two opposite short side walls (6, '7), the short side walls being a front wall for feeding a continuous flow of seeds (S1) of the substance to be granulated into the fluid bed (Z1) and a back wall for discharging the granules obtained (S2), respectively, a distributor-dispenser (11) being supported close to a top side of at least one long side wall (5), to feed a continuous flow (L) of a predetermined liquid granule growth substance of said first fluid bed (Z1);
- a second fluid bed (Z2), made in a second container (2a), preferably parallelepiped, equipped with a grid base (3a) to allow the passage of a second flow of fluidizing air (A2), used for the formation and support of said second fluid bed (Z2), positioned between respective side walls (4a, 5a, 6a, 7a), opposite each other in pairs, a second distributor-dispenser (11a) being supported close to a top side of at least one side wall (5a), to feed a granule growth substance (L) in liquid state to said second fluid bed (Z2) ;
- means (17, 18) for feeding the granules (S2) obtained in said first fluid bed (Z1) into said second fluid bed (Z2);
- means (16) for recovering the granules (S3) of substance of predetermined grain size from said second fluid bed (Z2).

7. Apparatus according to claim 6, **characterized in that** the respective structurally independent containers (2, 2a) of said first and second fluid bed (Z1 and Z2) have a side wall (8) in common such as to constitute a single structure.

8. Apparatus according to claim 7, **characterized in that** said common wall (8) constitutes the back wall (7) of said first container (2) and a front side wall (6a) of said second container (2a).

9. Apparatus according to claim 6, **characterized in that** said means (17, 18) for feeding the granules (S2) obtained in said first fluid bed (Z1) into said second fluid bed (Z2) comprise a distributor (18) ;extending above said second bed (Z2), substantially for the entire axial length thereof.

10. Apparatus according to claim 6, **characterized in that** said means for recovering the granules (S3) of substance of predetermined grain size from said second bed (Z2) comprise a plurality of slits (16) made in said grid base (3a) of the second container (2a), suitably sized and of a width linked to (greater than) the diameter of said granules (S3) of predetermined grain size intended to be produced and means for feeding said second flow of air (A2) or another suitable classification gas into said second fluid bed (Z2) through said slits (16).

11. Apparatus according to claim 6, **characterized in that** said grid base (3, 3a) of at least one of said first and second container (2, 2a) is equipped with holes (15) distributed in said base (3, 3a) with increasing density or pitch starting from a side wall (4, 4a) of the container (2, 2a) towards an opposite side wall (5, 5a) of the container itself.

12. Apparatus according to claim 11, **characterized in that** said holes (15) all have the same diameter or port.

13. Apparatus according to claim 6, **characterized in that** said grid base (3, 3a) of at least one of said first and second container (2, 2a) is equipped with holes (15) uniformly distributed in the base itself and having different diameters or ports, the diameter of each hole (15) gradually increasing as one approaches a side wall (5, 5a) of said container (2, 2a), on which a distributor-dispenser (11, 11a) of granule growth substance (L) is preferably supported.

14. Apparatus according to claim 6, **characterized in that** said grid base (3, 3a) of at least one of said first and second container (2, 2a) is equipped with holes (15) all equally inclined to the horizontal by a predetermined angle α, preferably between 30° and 60°.
